# FASCICULE DE BREVET EUROPEEN

(11) **EP 1 420 973 B1**
(45) Date de publication et mention de la délivrance du brevet: **04.05.2005**
(21) Numéro de dépôt: 02794607.8
(22) Date de dépôt: 19.07.2002
(51) Int. Cl.: B60K 17/356, F16H 61/40

(54) **DISPOSITIF DE TRANSMISSION HYDROSTATIQUE D'UN ENGIN MOBILE.**
HYDROSTATISCHE ÜBERTRAGUNGSVORRICHTUNG EINER MOBILEN MASCHINE
HYDROSTATIC TRANSMISSION DEVICE OF A MOBILE MACHINE

(30) Priorité: 09.08.2001 FR 0110633
(43) Date de publication de la demande: 26.05.2004
(73) Titulaire: POCLAIN HYDRAULICS INDUSTRIE, 60411 Verberie (FR)
(72) Inventeur: COUSIN, Jean-Claude, F-60700 PONTPOINT (FR); HEREN, Jean, F-60490 LA NEUVILLE SUR RESSONS (FR); LUCIENNE, Philippe, F-60300 AUMONT (FR)
(74) Mandataire: Intès, Didier Gérard André
(86) Numéro de dépôt international: PCT/FR2002/002582
(87) Numéro de publication internationale: WO 2003/013896

(56) Documents cités:
- EP-A- 0 547 947
- EP-A- 0 816 153
- EP-A- 1 010 566
- EP-A- 1 026 025
- FR-A- 2 719 001

## Description

La présente invention concerne un dispositif de transmission hydrostatique d'un engin mobile ayant un groupe d'organes de déplacement avant et un groupe d'organes de déplacement arrière, le ou les organes de déplacement de l'un desdits groupes étant orientable par rapport à celui ou à ceux de l'autre groupe selon les caractéristiques du préambule de la revendication 1 connues du document EP-A-547947.

Ainsi, le ou les organes de déplacement de l'un des groupes est ou sont directionnel(s) (selon le type d'engin, par exemple un tracteur pour la viticulture, il peut s'agir du groupe avant ou du groupe arrière) ou bien, ce qui revient au même du point de vue de la motricité de l'engin, ce dernier, par exemple un compacteur, est articulé entre ses essieux avant et arrière.

Le dispositif comprend un circuit fermé de transmission qui comporte une pompe et des moteurs hydrauliques d'un groupe de moteurs avant et d'un groupe de moteurs arrière entraînant les organes de déplacement avant et arrière, un premier de ces groupes de moteurs comprenant au moins deux moteurs auxquels sont respectivement attelés deux organes de déplacement situés de chaque côté de l'engin, les deux moteurs de ce premier groupe de moteurs étant des moteurs doubles, à deux cylindrées distinctes de fonctionnement qui correspondent respectivement à un premier et à un deuxième moteur élémentaire, le premier moteur élémentaire de chacun de ces moteurs doubles étant relié à la pompe en parallèle avec un moteur du deuxième groupe de moteurs, tandis que le deuxième moteur élémentaire est relié en série avec ledit moteur du deuxième groupe de moteurs, une première et une deuxième conduite de série existant ainsi entre les deuxièmes moteurs élémentaires de chacun des moteurs doubles et le deuxième groupe de moteurs.

Des dispositifs de ce type sont connus, par exemple par les documents EP-0 547 947, FR-2 719 001, EP-0 816 153 et EP-1 010 566.

On sait que le raccordement en série du deuxième moteur élémentaire avec le moteur du deuxième groupe permet de synchroniser les roues qui leur sont attelées, tandis que le raccordement du premier moteur élémentaire en parallèle avec le moteur du deuxième groupe permet d'obtenir des couples de sortie de ces moteurs qui sont égaux. Si la synchronisation des roues est utile en ligne droite, elle est gênante en virage car, dans une telle situation, les différentes roues du véhicule parcourent des distances différentes, en fonction des rayons de courbure de leurs trajectoires respectives.

Les documents précités préconisent donc, pour le comportement en virage, de supprimer momentanément la synchronisation en ajoutant des valves qui permettent de raccorder une conduite de série à la pompe pour court-circuiter le deuxième moteur élémentaire (EP-0 816 253) ou bien raccorder les conduites de série à la pompe en générant des différences de débit assimilables à une liaison partielle en parallèle. Dans EP-1 010 566, les conduites de série sont raccordées à la pompe avec des pressions différentes, tenant compte d'une situation de virage à droite ou de virage à gauche.

Dans les dispositifs précités, la suppression de la synchronisation des roues pour améliorer le comportement en virage de l'engin est réalisée à l'aide de valves qui sont commandées par l'opérateur, ou bien par un système prenant en compte la position angulaire des organes de déplacement directeurs, ce système pouvant directement être raccordé à un organe de direction tel qu'un volant ou une barre de direction. Ces systèmes peuvent être difficiles à implanter sur les engins, ou être encombrants, ou encore être fragiles dans les conditions de fonctionnement des engins sur les chantiers. D'autre part ces dispositifs sont adaptés à certaines configurations d'engins et ne conviennent pour d'autres.

L'invention vise à améliorer automatiquement le comportement de l'engin dans des situations de conduite particulières telles qu'un virage ou une situation de perte d'adhérence. Plus précisément, l'invention vise à conserver une bonne motricité de l'engin, quel que soit l'angle de braquage, même en cas de perte d'adhérence d'une ou deux roues, ceci de façon entièrement automatique, c'est-à-dire sans commande volontaire du conducteur, ni système de commande liée à un organe de direction. Par rapport aux documents de l'art antérieur précité qui visent un résultat comparable en altérant la synchronisation des organes de déplacement dans une situation telle qu'une conduite en virage, l'invention cherche à obtenir ce résultat sans intervention de l'opérateur ou des organes de direction et pour toutes les configurations d'engins.

Ce but est atteint avec le dispositif de l'invention grâce au fait que les conduites de série sont normalement raccordées à un circuit basse pression par des moyens pour limiter la pression dans les conduites de série et au fait qu'il comporte des moyens pour limiter le débit de fluide circulant entre les conduites de série et ledit circuit basse pression.

Comme on le verra dans la suite, les conduites de série peuvent être raccordées en permanence au circuit basse pression par des moyens pour limiter la pression dans ces conduites. En variante, ce raccordement peut être réalisé par l'intermédiaire de valves à plusieurs positions, auquel cas la position de repos de ces valves, dans laquelle elles sont constamment rappelées sans commande de la part de l'opérateur, est celle dans laquelle ce raccordement est réalisé, l'opérateur pouvant toutefois commander ces valves pour modifier cette situation, par exemple pour empêcher momentanément tout raccordement entre les conduites de série et le circuit basse pression ou pour provoquer momentanément un raccordement direct entre ces conduites permettant au fluide de circuler entre elles et le circuit basse pression sans passer par lesdits moyens de limitation de pression.

L'expression utilisée plus haut, indiquant que les conduites de série sont normalement raccordées au circuit basse pression par des moyens pour limiter la pression dans ces conduites, englobe ces différentes possibilités.

Pour simplifier la description, on considérera dans la suite que tous les organes de déplacement du véhicule sont des roues. Il doit toutefois être entendu que l'invention s'applique également à des engins ayant d'autres types d'organes de déplacement, par exemple, à l'avant, un organe de déplacement unique constitué par la bille d'un compacteur et, à l'arrière, deux roues.

En virage, les différentes roues de l'engin ne décrivent pas les mêmes courbes. Elles doivent donc couvrir une distance différente pour assurer le déplacement de l'engin comme l'explique EP-1 010 566. Ainsi, la roue qui est attelée à un moteur du premier groupe de moteurs et celle qui est attelée au moteur du deuxième groupe raccordé en série avec le deuxième moteur élémentaire dudit moteur du premier groupe ne couvrent pas la même distance.

Pour assurer la trajectoire de l'engin, l'une de ces roues doit donc tourner plus vite que l'autre. Il en résulte que le moteur de l'une des roues [celle qui tourne moins vite] reçoit ou refoule, par la conduite de série, un débit de fluide trop important par rapport à celui que doit refouler ou recevoir le moteur de l'autre roue.

Grâce à l'invention, ce débit excédentaire peut s'écouler vers le circuit basse pression. Pour conserver la motricité de l'engin, le débit de fluide qui s'écoule de cette manière est toutefois limité. De plus, la pression dans les conduites de série est limitée car l'excès de pression peut être dérivé vers le circuit basse pression. On évite ainsi que la limitation de l'écoulement du débit excédentaire vers le circuit basse pression, qui est opérée par les moyens pour limiter le débit, ne soit trop importante et ne conduise à générer, dans les conduites de série, des surpressions nuisibles à la durée de vie des composants.

Cette disposition est particulièrement utile en cas de perte d'adhérence de l'une des deux roues qui sont reliées en série par la conduite de série entre le deuxième moteur élémentaire et le moteur du deuxième groupe. En effet, dans ce cas, le débit refoulé dans la conduite de série par le moteur de la roue qui patine peut être important et il en résulte un risque de surpression dans cette conduite.

De préférence, le dispositif comprend, pour chaque conduite de série, des moyens pour limiter le débit de fluide circulant entre la conduite de série considérée et le circuit de basse pression. Plus précisément, les première et deuxième conduites de série sont respectivement normalement (c'est-à-dire en permanence ou par défaut de commande de valves) reliées au circuit basse pression par une première et une deuxième conduite de raccordement, et des moyens pour limiter le débit de fluide sont disposés sur chacune de ces conduites de raccordement.

Avec cette disposition préférentielle, le débit de fluide est limité entre les conduites de série et les circuits basse pression, et l'on évite également les transferts de débit trop important entre les deux conduites de série qui sont reliées toutes deux au circuit basse pression. Des transferts restent toutefois possibles, par l'intermédiaire du circuit basse pression.

Selon une première variante avantageuse, les moyens pour limiter le débit de fluide circulant entre les conduites de série et le circuit basse pression comprennent au moins une restriction.

Une restriction est un élément hydraulique extrêmement simple pour limiter le débit entre la conduite de série à laquelle elle est reliée et le circuit basse pression.

Par exemple, on peut disposer une restriction sur chacune des deux conduites de raccordement précitées.

Selon une deuxième variante avantageuse, les moyens pour limiter le débit de fluide circulant entre les conduites de série et le circuit basse pression comprennent au moins un régulateur de débit.

Une simple restriction occasionne une perte de charge entre ses deux bornes, cette perte de charge augmentant proportionnellement au carré du débit qui traverse la restriction. Elle est dimensionnée pour laisser passer un débit limité à une pression donnée.

Ainsi, lorsque les conditions de fonctionnement de l'engin sont telles que la pression augmente, le débit évacué de la conduite de série augmente lui aussi. La restriction a donc tendance à autoriser, pour la roue dont le moteur refoule dans la conduite de série, un glissement qui augmente lorsque la pression augmente.

En revanche, lorsque l'on utilise un régulateur de débit, ce dernier est traversé par le fluide pratiquement sans chute de pression tant que le débit qui le traverse n'a pas atteint la valeur de saturation correspondant à son réglage. Lorsque cette valeur de saturation est atteinte, le débit qui traverse le régulateur reste sensiblement fixé sur cette valeur de saturation et, à partir de cette situation, quelle que soit la pression dans la conduite série, on n'autorise à la roue dont le moteur refoule dans cette conduite qu'un glissement limité correspondant à ce débit.

Il est par exemple avantageux de disposer un régulateur de débit sur chacune des deux conduites de raccordement citées précédemment. En effet, dans ce cas, tant que la pression de fluide dans les conduites de série n'a pas atteint la valeur générant le débit de saturation de ces régulateurs, il existe un équilibrage entre les deux conduites de série, le fluide circulant sensiblement librement entre elles. En revanche, lorsque la pression dans l'une des conduites de série a atteint cette valeur de saturation, le débit qui traverse le régulateur qui est associé à cette conduite reste sensiblement fixé à la valeur de saturation, et les pressions dans les deux conduites de raccordement, et donc dans les deux conduites de série, évoluent différemment l'une de l'autre.

Avantageusement, les conduites de série sont normalement reliées au circuit basse pression par l'intermédiaire d'une soupape tarée.

Cette soupape est tarée pour une certaine pression, c'est-à-dire qu'elle n'autorise le transfert de débit entre les conduites de série et le circuit basse pression que lorsque la pression dans ces conduites a atteint une valeur donnée.

On peut utiliser une soupape tarée pour chaque conduite de série, ou bien utiliser une seule soupape tarée pour les deux conduites, disposée sur un tronçon de conduite commune reliant les deux conduites de raccordement précitées au circuit basse pression.

En effet, avantageusement, le dispositif comprend un tronçon de conduite commune reliant les deux conduites de raccordement au circuit basse pression, et des moyens supplémentaires pour limiter le débit et/ou la pression sont disposés sur ledit tronçon de conduite commune.

Les moyens supplémentaires pour limiter le débit et/ou la pression peuvent être constitués par la soupape tarée évoquée ci-dessus. Ils peuvent également comprendre une simple restriction disposée sur le tronçon de conduite commune, ou bien un régulateur de débit disposé sur ce tronçon.

Plutôt qu'une soupape tarée, ils peuvent encore comprendre une soupape commandée par la différence de pression entre le tronçon de conduite commune et celui des orifices de la pompe du circuit fermé qui est à la pression la plus élevée.

L'existence d'un tel tronçon de conduite commune permet le transfert de fluide entre les conduites de série par les conduites de raccordement (transfert éventuellement limité par les restrictions ou les régulateurs disposés sur ces conduites) qui se rejoignent en étant raccordées au tronçon de conduite commune.

Avantageusement, le dispositif comprend un diviseur de débit qui relie la pompe avec les premiers moteurs élémentaires par deux conduites parallèles respectivement reliées à chacun desdits moteurs.

Dans ce cas, avantageusement, les deux conduites parallèles sont reliées par un tronçon de liaison équipé de moyens pour limiter le débit de fluide entre lesdites conduites parallèles.

Un diviseur de débit permet d'éviter les situations de patinage entre deux roues d'un même essieu, en répartissant le débit de fluide entre les premiers moteurs élémentaires de ces deux roues d'un même essieu, même si l'une d'entre elles patine.

L'existence d'un tronçon de liaison équipé de moyens pour limiter le débit de fluide entre les conduites parallèles, permet de réaliser un transfert de débit entre ces conduites parallèles dans une proportion déterminée par lesdits moyens pour limiter le débit. Ceci permet de "dégrader" légèrement le fonctionnement du diviseur de débit afin d'éviter que d'éventuelles légères différences de cylindrées entre les moteurs équipant les deux roues du même essieu ou de gonflage de ces roues ne nuisent au bon fonctionnement du véhicule. Le transfert de débit opéré par ce tronçon de liaison permet également de compléter les moyens principaux de l'invention pour diriger, vers celui des premiers moteurs élémentaires d'un même essieu qui tourne le plus vite en virage, le léger excédant de débit qui est nécessaire.

Selon une variante, le circuit basse pression est un circuit de gavage alimenté par une pompe de gavage.

La pompe de gavage utilisée habituellement pour éviter la cavitation dans les moteurs sert donc à alimenter le circuit basse pression.

Selon une autre variante, le circuit basse pression comprend une conduite d'alimentation basse pression reliée à la basse pression de la pompe par un sélecteur de la basse pression relié aux deux orifices de la pompe.

Comme on l'expliquera dans la suite, cette autre variante est particulièrement avantageuse pour obtenir un bon fonctionnement de l'engin en marche avant comme en marche arrière.

Selon une variante, les conduites de série sont reliées au circuit basse pression par l'intermédiaire d'un sélecteur de synchronisation apte, dans sa position de repos, à effectivement mettre en communication les conduites de série avec le circuit basse pression et à être commandé dans une position active dans laquelle ce sélecteur empêche la circulation de fluide des conduites de série vers le circuit basse pression.

Selon une variante, les conduites de série sont reliées au circuit basse pression par l'intermédiaire d'un sélecteur de court-circuit apte à être commandé dans une position active dans laquelle ce sélecteur établit une communication directe entre les conduites de série et le circuit basse pression, à partir de sa position de repos dans laquelle il empêche ladite communication directe.

Avantageusement, les moyens pour limiter la pression dans les conduites de série et les moyens pour limiter le débit de fluide circulant entre les conduites de série et le circuit basse pression ainsi que, lorsqu'ils sont présents, le sélecteur de synchronisation et/ou le sélecteur de court-circuit, sont regroupés dans un bloc de valves.

Un tel bloc de valves peut être manipulé comme un tout, qui peut être flasqué ou fixé d'une autre manière sur l'un des moteurs, ou bien sur le corps de la pompe ou sur tout autre support récepteur.

L'invention sera bien comprise et ses avantages apparaîtront mieux à la lecture de la description détaillée qui suit, d'un mode de réalisation représenté à titre d'exemple non limitatif. La description se réfère aux dessins annexés, sur lesquels :
- la figure 1 montre schématiquement un dispositif conforme à l'invention, selon une première variante de réalisation ; et
- les figures 2 à 7 sont des vues analogues à celles de la figure 1 pour d'autres variantes.

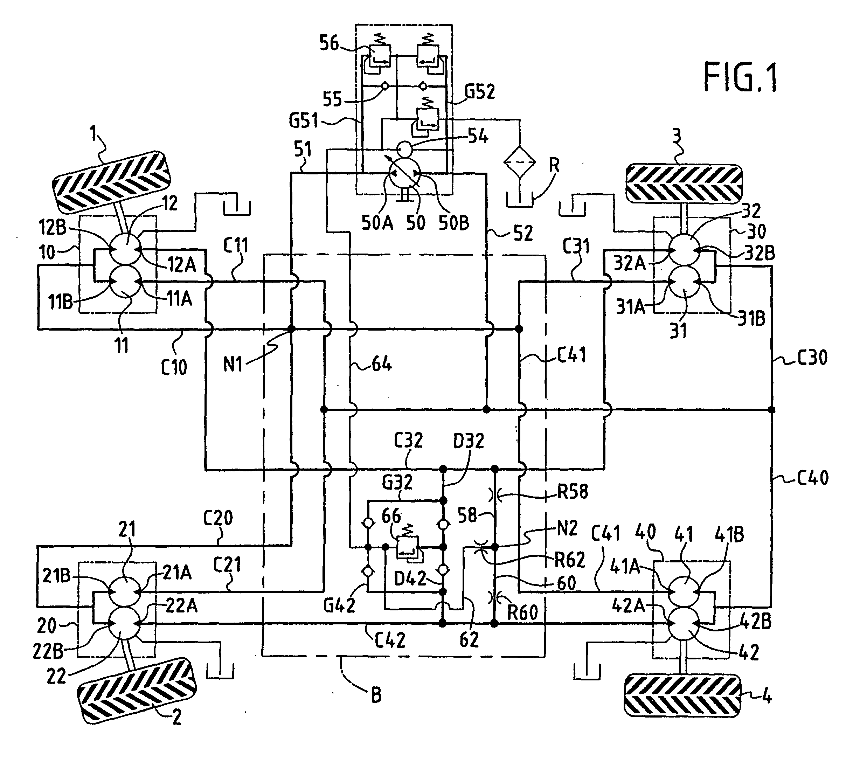

L'engin de la figure 1 comprend quatre roues motrices, les roues 1 et 2 d'un essieu étant directionnelles, tandis que les roues 3 et 4 de l'autre essieu ne le sont pas. Selon le type d'engin, l'essieu directionnel peut être l'essieu avant ou bien l'essieu arrière.

Chacune des roues 1 à 4 est motrice et est attelée à un moteur hydraulique, respectivement 10, 20, 30 et 40. Le circuit de transmission est un circuit fermé et comprend une pompe 50 à deux orifices, respectivement 50A et 50B, et à débit variable.

Dans la variante de la figure 1, les quatre moteurs sont des moteurs doubles. Ils comprennent chacun un premier et un deuxième moteur élémentaire, respectivement 11 et 12, 21 et 22, 31 et 32 et 41 et 42.

On considère que les moteurs 30 et 40 sont des moteurs du premier groupe. Les premiers moteurs élémentaires 31 et 41 de ces moteurs 30 et 40 sont reliés à la pompe 50 en parallèle avec les moteurs 10 et 20. En revanche, les deuxièmes moteurs élémentaires 32 et 42 ont une liaison en série avec, respectivement, les moteurs 10 et 20.

Chaque moteur élémentaire présente un premier orifice, désigné par la référence du moteur élémentaire considéré suivie de la lettre A, ainsi qu'un deuxième orifice, désigné par la même référence suivi de la lettre B. Selon le sens de fonctionnement de la pompe, ces orifices servent à l'alimentation ou à l'échappement du moteur élémentaire considéré. Dans l'exemple représenté, les moteurs 10 à 40 sont des moteurs dits à trois trous, c'est-à-dire que les premiers orifices (suivis de la lettre A) de leurs moteurs élémentaires sont dissociés et forment ainsi deux premiers orifices principaux du moteur double, tandis que les deuxièmes orifices (suivis de la lettre B) des moteurs élémentaires sont regroupés pour former un troisième orifice principal du moteur double. Selon le sens d'alimentation du moteur, les deux premiers orifices principaux d'une part, et le troisième orifice principal d'autre part, servent à l'alimentation ou à l'échappement.

On considère par exemple que les orifices 50A et 50B de la pompe 50 servent respectivement à l'alimentation et à l'échappement. Ainsi, la conduite d'alimentation 51 reliée à l'orifice 50A alimente en parallèle les moteurs 10 et 20, par les deuxièmes orifices 11 B, 12B, 21 B et 22B de leurs moteurs élémentaires respectifs, et alimentent également en parallèle les premiers moteurs élémentaires 31 et 41 des moteurs 30 et 40, par leurs premiers orifices, respectivement 31A et 41A. En effet, à partir d'un noeud N1, la conduite 51 se subdivise en des conduites parallèles, respectivement reliées à ces différents moteurs et respectivement désignés par les références C10, C20, C31 et C41.

Pour leur échappement, les moteurs élémentaires 11 et 21 des moteurs doubles 10 et 20 sont reliés en parallèle, respectivement par des conduites C11 et C21, à la conduite d'échappement 52 qui est raccordée à l'orifice 50B de la pompe. De même, les moteurs doubles 30 et 40 sont reliés en parallèle, par des conduites C30 et C40, à la même conduite d'échappement.

En revanche, les deuxièmes moteurs élémentaires 32 et 42 des moteurs doubles 30 et 40 sont alimentés en étant reliés aux orifices d'échappement 12A et 22A des moteurs élémentaires 12 et 22 par des conduites de série, respectivement C32 et C42.

Les quatre moteurs du dispositif de la figure 1 étant des moteurs doubles dits à trois trous, et le circuit étant symétrique du point de vue de l'alimentation et de l'échappement des moteurs de deux essieux, on peut également considérer que les moteurs 10 et 20 constituent, au sens de la définition donnée par la partie introductive de la présente description, les moteurs du premier groupe dont les premiers moteurs élémentaires 11 et 21 sont reliés à la pompe en parallèle avec les moteurs 30 et 40, et dont les deuxièmes moteurs élémentaires 12 et 22 sont raccordés en série avec les moteurs élémentaires 32 et 42.

De manière connue en soi, le dispositif représenté sur la figure 1 comporte un circuit de gavage comprenant une pompe de gavage 54 qui, par l'intermédiaire de clapets anti-retour 55 et de limiteurs de pression 56, peut alimenter en fluide les conduites 51 ou 52, par des conduites G51 et G52, pour éviter la cavitation dans les moteurs.

Selon la première variante de l'invention, le circuit basse pression auquel sont reliées les conduites de série C32 et C42 pour y évacuer le débit excédentaire de ces conduites en virage est le circuit de gavage. Pour raccorder ces conduites de série au circuit de gavage, deux conduites de raccordement, respectivement 58 pour la conduite C32 et 60 pour la conduite C42 sont prévues. Elles se rejoignent en un noeud N2, à partir duquel s'étend un tronçon de conduite commune 62 qui est relié à une conduite 64 de raccordement au gavage.

Selon la variante de la figure 1, les moyens de l'invention pour limiter le débit de fluide circulant entre les conduites de série et le circuit basse pression constitué par le circuit de gavage comprennent des restrictions. Plus précisément, des restrictions R58 et R60 sont respectivement disposées sur les conduites de raccordement 58 et 60, et une restriction R62 est disposée sur le tronçon de conduite commune 62.

On pourrait se contenter de prévoir moins de restrictions, en éliminant par exemple la restriction R62. Toutefois, pour limiter suffisamment le débit de fluide circulant entre les conduites de série et le circuit basse pression, il faudrait alors choisir des restrictions R58 et R60 de très faible section de passage. Les restrictions très petites sont plus coûteuses à fabriquer et, de plus, elles risquent de se boucher si le fluide véhicule des impuretés. C'est pourquoi on préfère utiliser les restrictions R58 et R60 ayant des sections de passage raisonnablement petites, correspondant par exemple à des diamètres de 0,5 mm, et une restriction R62 ayant également une section de passage raisonnablement faible, par exemple ayant un diamètre de 0,8 mm. De plus, l'existence de restrictions générant de faibles pertes de charge sur les conduites de raccordement 58 et 60 permet un transfert de fluide entre les conduites de série C32 et C42 -pour favoriser ainsi un apport de fluide aux moteurs qui entraînent ceux des organes de déplacement qui, par exemple dans un virage, doivent parcourir une distance plus grande que les autres. La restriction R62 est disposée sur le tronçon de conduite commune pour générer la perte de charge souhaitée entre le noeud N2 et le circuit basse pression.

Selon la première variante de l'invention, un limiteur de pression 66 est également utilisé pour limiter la pression dans les conduites de série C32 et C42. Ce limiteur de pression est disposé entre ces conduites de série et la conduite de raccordement au gavage 64. Son entrée est raccordée aux conduites de série par des dérivations, respectivement D32 et D42, disposées en parallèle des conduites de raccordement 58 et 60 et équipées chacune d'un clapet anti-retour permettant seulement la circulation de fluide dans le sens allant de la conduite de série considérée au limiteur de pression 66. Comme le tronçon de conduite commune 62, la sortie du limiteur de pression 66 est raccordée à la conduite 64. Par exemple, ce limiteur de pression est taré à la pression de tarage de la pompe 50, ou plus dans les limites de pression autorisées par le constructeur des moteurs, soit environ 350 à 450 bars. Il évite que la pression de fluide dans les conduites de série ne devienne supérieure à cette pression de tarage et ne puisse endommager les composants.

Dans l'exemple représenté sur la figure 1, le circuit basse pression est le circuit de gavage et la pompe de gavage 54 sert également, par la conduite de raccordement au gavage 64, à assurer le gavage des conduites de série C32 et C42 pour éviter la cavitation des moteurs raccordés à ces conduites, par exemple en virage dans le sens de marche inverse lorsque le moteur d'une roue directrice appelle plus de débit dans la conduite de série que n'en refoule le moteur de la roue non directrice. Pour cela, deux branches de gavage, respectivement G32 et G42 sont disposées entre la conduite de raccordement au gavage 64 et chacune des conduites de série, respectivement C32 et C42. De manière classique, ces branches de gavage comportent des clapets anti-retour permettant seulement la circulation du fluide dans le sens allant du gavage vers les conduites de série. On pourrait également choisir d'assurer le gavage des moteurs d'une autre manière.

On pourrait également choisir d'utiliser comme circuit basse pression, auquel sont raccordées les conduites de série, un simple retour à un réservoir de fluide R sans pression ou, plus exactement, à la pression atmosphérique. Pour ce faire, la conduite 64 pourrait être directement raccordée au réservoir R.

On a précédemment indiqué qu'il est intéressant d'opérer un transfert de fluide entre les conduites de série, en choisissant les restrictions R58 et R60 avec des sections de passage raisonnablement faibles. On pourrait même choisir de ne pas disposer de restrictions sur les conduites de raccordement 58 et 60, et de limiter le débit de fluide entre les conduites de série et le circuit basse pression par une ou plusieurs restrictions disposées sur le tronçon de conduite commune 62.

On pourrait au contraire choisir de ne pas utiliser un tel tronçon de conduite commune, et raccorder directement chacune des conduites 58 et 60, équipées de leurs restrictions respectives R58 et R60, à la conduite 64.

Le dispositif de la figure 1 comprend un arrangement de limitation de pression, qui est commun aux conduites de série C32 et C42 et qui, en l'espèce, est constitué par le limiteur de pression 66.

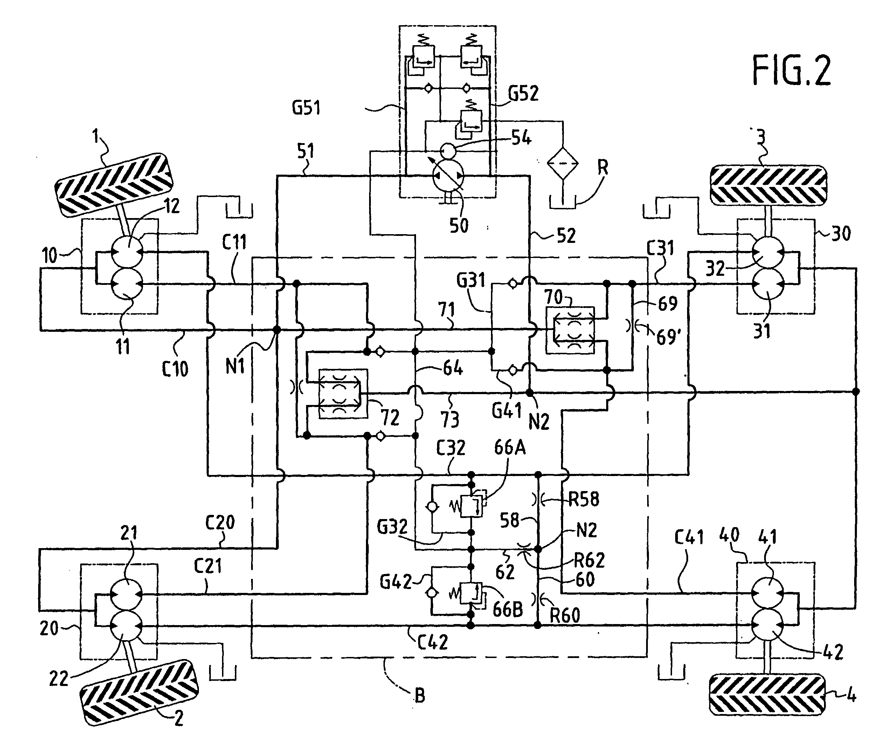

Sur la figure 2, un arrangement de limitation de pression est prévu pour chacune des conduites de série. On décrit maintenant cette figure, sur laquelle les éléments inchangés par rapport à la figure 1 sont affectés de références inchangées.

Pour limiter la pression dans la conduite de série C32, un premier limiteur de pression 66A est disposé entre cette conduite et le tronçon de conduite commune 62, qui est raccordé à la conduite de raccordement au gavage 64. Pour limiter la pression dans la conduite de série C42, un deuxième limiteur de pression 66B est disposé entre cette conduite C42 et le tronçon de conduite commune 62.

Comme sur la figure 1, le circuit basse pression est un circuit de gavage, et le gavage des moteurs reliés aux conduites de série peut être assuré par des branches de gavage, respectivement G32 et G42, respectivement disposées en dérivation des limiteurs de pression 66A et 66B.

On pourrait parfaitement concevoir un dispositif se différenciant de celui de la figure 1 seulement par les dispositions des limiteurs de pression 66A, 66B qui viennent d'être décrites.

Comme celui de la figure 1, un tel dispositif permettrait une liaison permanente entre les conduites de série C32 et C42, avec des restrictions permettant un faible transfert de débit entre les deux côtés du véhicule en virage vers le circuit basse pression.

Le dispositif de la figure 2 se différencie toutefois de celui de la figure 1 en ce qu'il comprend, en outre, deux diviseurs de débit, respectivement désignés par les références 70 et 72.

Le diviseur de débit 70 est disposé au noeud de raccordement entre, d'une part, les conduites parallèles C31 et C41 et, d'autre part, la conduite principale 51 ou, plus précisément, un tronçon de conduite de division 71 relié à la conduite 51 au noeud N1. Ainsi, le débit de fluide refoulé par l'orifice 50A de la pompe 50 est réparti entre les conduites C31 et C41 par le diviseur. Si les moteurs 31 et 41 ont la même cylindrée et si les conditions d'entraînement des roues 3 et 4 sont les mêmes, le débit est divisé pour moitié entre les deux conduites parallèles C31 et C41.

Pour compenser d'éventuelles différences de comportement entre les roues 3 et 4 et/ou les moteurs 30 et 40, le fonctionnement du diviseur de débit 70 peut être altéré par un tronçon de liaison 69 équipé d'une restriction 69'. Cette restriction peut être remplacée par un régulateur de débit qui, tant que le débit n'a pas atteint la valeur régulée, n'occasionne pratiquement pas de perte de charge entre son entrée et sa sortie. Dans ce cas, ce régulateur est à double flux, c'est-à-dire à deux sens de fonctionnement, pour réguler le débit dans les deux sens entre les conduites parallèles entre lesquelles s'étend le tronçon de liaison.

Sur la figure 2, on voit encore que des branches de gavage G31 et G41 sont disposées entre la conduite de raccordement au gavage 64 et les conduites parallèles C31 et C41. Si, par exemple, les moteurs 10 et 11 étaient des moteurs à cylindrée unique, ou bien si les roues 1 et 2 étaient remplacées par un seul organe de déplacement entraîné par un seul moteur à deux cylindrées formant deux moteurs élémentaires, alors seuls les premiers moteurs élémentaires 31 et 41 du premier groupe, qui sont alimentés en parallèle avec les moteurs du deuxième groupe, le seraient par l'intermédiaire du diviseur de débit 70. On sait que l'existence du diviseur de débit permet d'éviter que, si l'une des roues 3 et 4 patine, l'intégralité du débit circulant dans la conduite 71 ne soit consommée par le moteur entraînant cette roue. On conserve ainsi la motricité de celle des roues qui ne patine pas.

Dans l'exemple de la figure 2, les moteurs 10 et 12 sont également des moteurs doubles et le diviseur de débit 72, dans le même sens de marche que précédemment, réunit les débits de fluide des conduites parallèles C11 et C21, dans la conduite 52 (par la conduite de division 73 qui est raccordée à la conduite 52 au noeud N2). Le fonctionnement du diviseur de débit 72 est analogue à celui du diviseur 70 dans le sens inverse de marche. Comme lui, il peut voir son fonctionnement altéré à l'aide d'un tronçon de liaison, s'étendant entre les deux conduites parallèles C11 et C21 et équipé de moyens pour limiter le débit du fluide entre ces conduites parallèles.

Grâce à l'invention, en raison du raccordement des conduites de série au circuit basse pression, seuls deux diviseurs de débit, un par essieu, sont suffisants pour conserver sa motricité à l'engin même lorsque deux roues sont en situation de perte d'adhérence, qu'il s'agisse de deux roues d'un même essieu ou de deux roues disposées en diagonale.

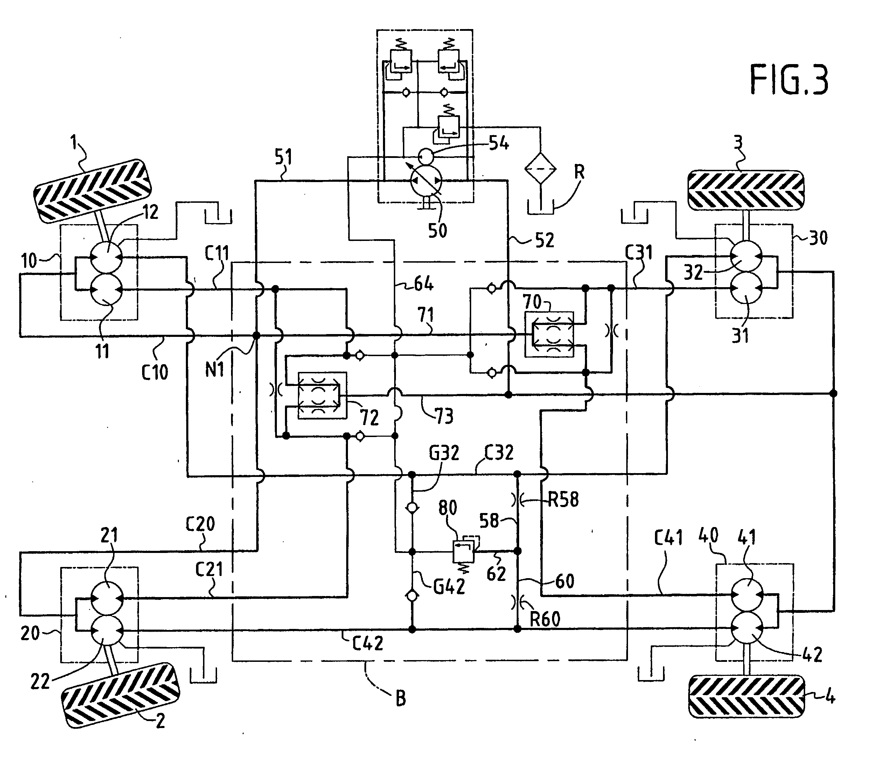

Sur la figure 3, les conduites de série C32 et C42 sont reliées au circuit basse pression par l'intermédiaire d'une soupape tarée 80.

En l'espèce, cette soupape est disposée entre le tronçon de conduite commune 62 et la conduite de raccordement au gavage 64. Disposée de la sorte, cette soupape joue également le rôle de limiteur de pression pour les conduites de série C32 et C42. Sa section peut être limitée pour, lorsqu'elle est ouverte, lui permettre de jouer le rôle d'un limiteur de débit comme la restriction R62 de la figure 1.

Des branches de gavage G32 et G42 sont disposées entre la conduite 64 et les conduites de série C32 et C42. Comme sur la figure 2, ces branches de gavage peuvent être disposées en parallèle avec des limiteurs de pression du type des limiteurs 66A et 66B.

La soupape 80 n'autorise l'évacuation du débit des conduites de série vers la conduite de raccordement au gavage 64 que lorsque la pression dans le tronçon de conduite commune 62 a atteint une valeur seuil correspondant à son tarage. En raison de la présence des restrictions R58 et R60, cette valeur seuil de tarage est inférieure à la pression de tarage de la pompe 50, et est par exemple de l'ordre de 250 bars.

Du fait de la présence de la soupape 80, celle de limiteurs de pression du type des limiteurs 66A et 66B n'est pas toujours nécessaire. Elle peut l'être si l'on souhaite assurer une sécurité maximale, et si on souhaite par exemple éviter les risques qu'une éventuelle obturation de l'une des restrictions R58 et R60 n'occasionne une surpression dans les conduites de série.

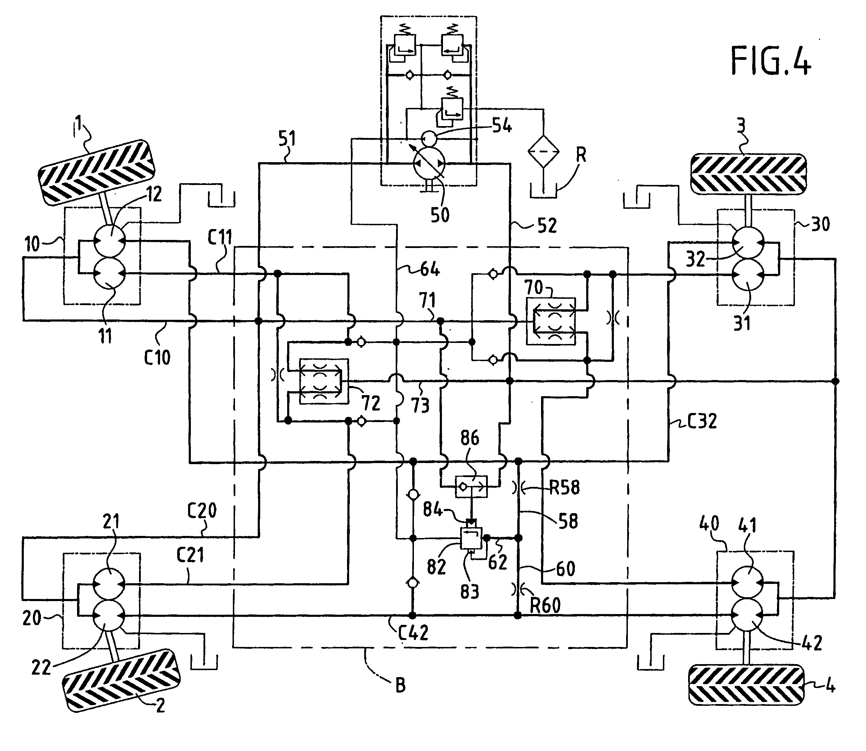

La variante de la figure 4 diffère de celle de la figure 3 en ce que la soupape tarée 80 est remplacée par une soupape 82, qui est commandée par la différence de pression entre le tronçon de conduite commune 62 et l'un des orifices de la pompe 50 et qui est interposée entre le tronçon de conduite commune 62 et le circuit basse pression. En fait, comme la soupape 80, la soupape 82 est disposée entre le tronçon de conduite commune 62 et la conduite 64.

Plus précisément, la soupape 82 est soumise à la pression dans le tronçon de conduite commune 62 par une première chambre de commande 83 qui est reliée à ce tronçon, et elle est soumise à la haute pression de la pompe 50 par une deuxième chambre de commande 84. Ces chambres de commande ont des effets antagonistes, c'est-à-dire que l'augmentation de la pression dans l'une d'entre elles a un effet contraire à l'augmentation de la pression dans l'autre. La deuxième chambre 84 est reliée à l'un des orifices 50A et 50B de la pompe par l'intermédiaire d'un clapet navette 86 qui sélectionne la plus haute des pressions auxdits orifices. Les deux bornes d'entrée de ce clapet sont en effet raccordées aux conduites 51 et 52, tandis que sa borne de sortie est raccordée à la chambre 84.

Les conformations des chambres de commande 83 et 84 sont telles que la soupape 82 s'ouvre lorsque le rapport entre la pression dans le tronçon de conduite commune 62 et la pression dans celle des conduites 51 et 52 qui est mise à la plus haute pression atteint une valeur donnée. Compte tenu en outre de la présence des restrictions R58 et R60 qui occasionnent des pertes de charge, on peut par exemple définir les chambres 83 et 84 pour que la soupape 82 s'ouvre de manière à maintenir la pression dans les conduites de série au voisinage de la moitié de la pression dans celles des conduites 51 et 52 qui est à la haute pression, ce qui permet de répartir pour moitié l'effort de traction entre les roues d'un même côté de l'engin.

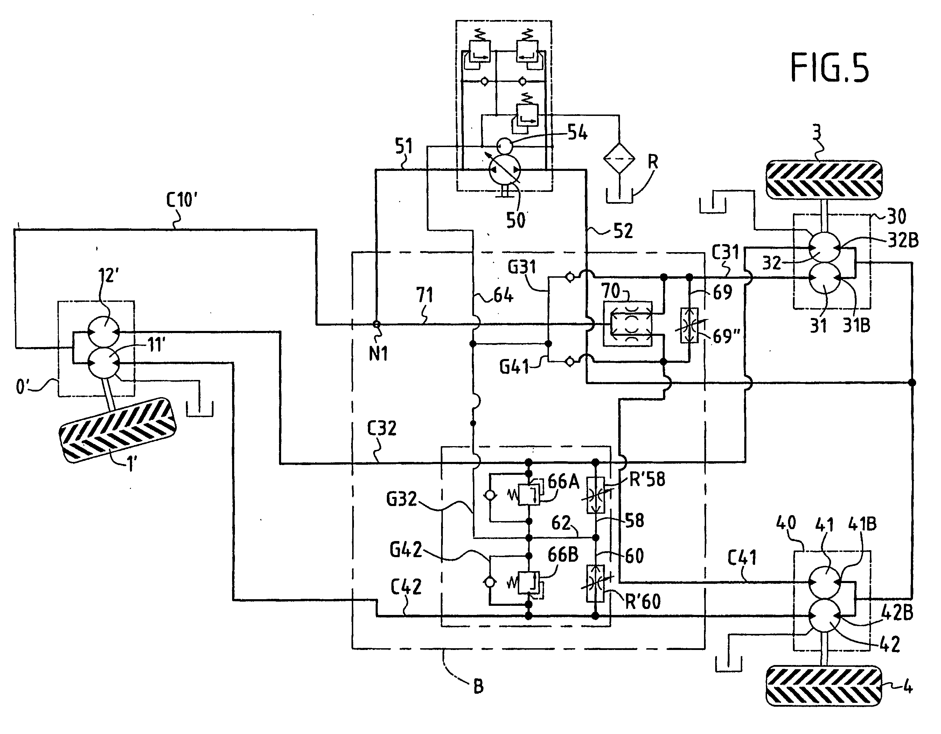

La figure 5 montre une variante dans laquelle les moteurs 30 et 40 sont des moteurs doubles attelés à deux roues, respectivement 3 et 4. En revanche, l'autre essieu comporte un seul organe de déplacement 1', par exemple une roue ou la bille d'un compacteur, entraînée par un moteur double 10'. Ce moteur double se compose de deux moteurs élémentaires, respectivement 12' et 11'. Il faut noter que le circuit représenté sur la figure 5 pourrait être identique si le moteur double 10' était remplacé par deux moteurs, correspondant respectivement au moteur élémentaire 11' et 12' et entraînant chacun une roue.

La conduite 51 se subdivise à partir d'un noeud N1 en une conduite C10' pour l'alimentation du moteur 10' et en des conduites parallèles C31 et C41 (avec éventuellement l'interposition du diviseur de débit 70 raccordé à la conduite 51 par la conduite de division 71). Les moteurs élémentaires 31 et 41, respectivement reliés aux conduites C31 et C41, sont ainsi alimentées en parallèle avec le moteur 10'.

Les deuxièmes moteurs élémentaires 32 et 42 sont, quant à eux, reliés en série avec, respectivement, les moteurs élémentaires 12' et 11', respectivement par les conduites de série C32 et C42. Les orifices communs 31 B, 32B des moteurs élémentaires 31 et 32 d'une part, et les orifices communs 41 B, 42B des moteurs élémentaires 41 et 42 d'autre part, qui forment respectivement les troisièmes orifices des moteurs 30 et 40, sont raccordés à la conduite 52.

Ainsi, si la conduite 51 sert à l'alimentation dans le sens préférentiel de déplacement de l'engin, les moteurs 32 et 42 sont alimentés par le fluide refoulé par les moteurs élémentaires 12' et 11'. La situation est inverse dans l'autre sens de fonctionnement de la pompe.

On retrouve comme sur les schémas précédents les conduites de raccordement 58 et 60, équipées de moyens pour limiter le débit de fluide entre les conduites de série C32 et C42 et le circuit basse pression, par exemple un circuit de gavage.

Dans l'exemple représenté, ces moyens sont constitués par des régulateurs de débit R'58 et R'60 à simple ou double flux. Une restriction ou un régulateur de débit peut éventuellement être disposé sur le tronçon de conduite commune 62, ce qui n'est pas le cas dans l'exemple représenté. Comme sur la figure 2, des limiteurs de pression 66A et 66B sont disposés entre le tronçon de conduite commune 62 et, respectivement, les conduites de série C32 et C42. Les branches de gavage G32 et G42 sont également présentes.

On remarque encore que, dans l'exemple de la figure 5, c'est un régulateur de débit double flux 69" qui est disposé sur le tronçon de liaison 69. Le gavage des moteurs élémentaires 31 et 41 est assuré par des branches de gavage, respectivement G31 et G41, reliées à la conduite de raccordement au gavage 64, en plus du gavage assuré par les conduites G51 et G52 reliées aux conduites 51 et 52.

La figure 5 s'applique donc à la transmission hydrostatique d'un engin à trois roues, dont la roue isolée est entraînée par un moteur double, ou bien à celle d'un engin à quatre roues, dont deux roues sont entraînées, chacune, par un moteur simple, ou bien par un moteur à plusieurs cylindrées, dont toutes les cylindrées sont parfaitement alimentées en parallèle.

Dans un tel cas de figure, un seul diviseur de débit 70 est suffisant pour éviter les risques de patinage dans le cas où deux roues d'un même côté perdraient de l'adhérence.

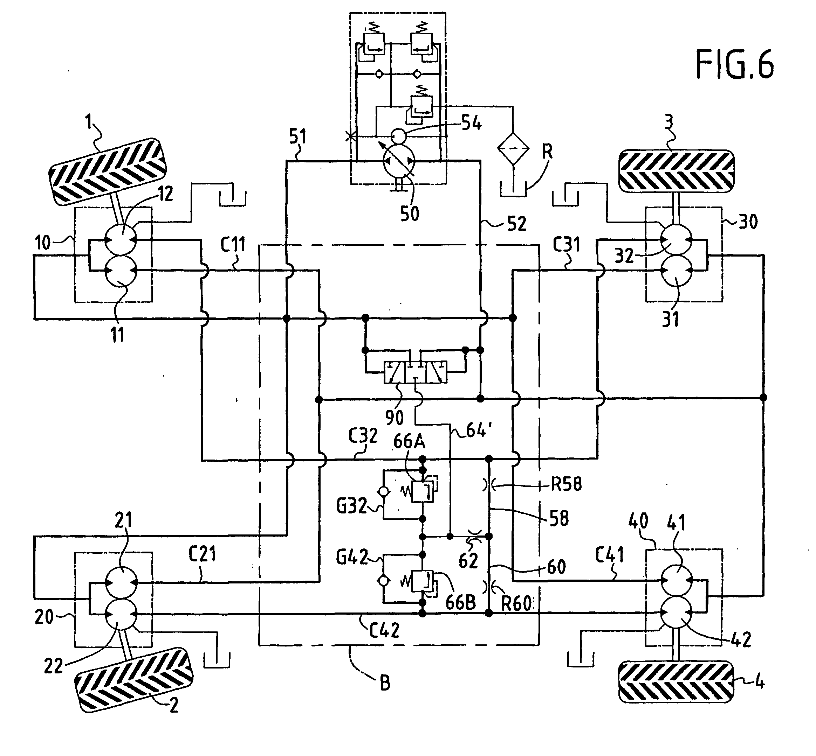

La figure 6 montre une variante sensiblement analogue à celle de la figure 1, à ceci près que le limiteur de pression 66 de cette figure est remplacé par les deux limiteurs de pression 66A et 66B de la figure 2.

L'autre différence importante de la variante de la figure 6 par rapport à celle des figures précédentes réside dans le fait que le circuit basse pression n'est pas le circuit de gavage. En effet, le circuit basse pression comprend une conduite d'alimentation basse pression 64' qui est reliée à la basse pression de la pompe 50 par un sélecteur de basse pression 90. Celui-ci comporte trois voies, respectivement reliées aux conduites 51 et 52 et à la conduite 64'. Le sélecteur est capable d'adopter au moins deux positions, en étant commandé par la pression qui règne dans les conduites 51 et 52, pour mettre en communication celle de ces conduites qui est à la plus basse pression avec la conduite d'alimentation basse pression 64'. Dans l'exemple représenté, ce sélecteur est en outre capable d'adopter une troisième position dans laquelle il isole ses trois voies les unes des autres lorsque les pressions dans ces conduites sont égales.

Par rapport au circuit basse pression des figures précédentes, celui de la figure 6 présente un avantage lorsque l'engin fonctionne en marche arrière, situation dans laquelle les conduites de série C32 et C42 servent non pas à l'alimentation en fluide des moteurs élémentaires 31 et 41, mais au refoulement du fluide s'échappant de ces moteurs. En effet, dans les circuits des figures 1 à 5, dans un tel cas, en virage, le débit de fluide dans les conduites de série devenait insuffisant et était complété par du fluide de gavage provenant de la pompe de gavage 50. Ainsi, le débit au retour de la pompe 50 devenait supérieur à son débit de refoulement, et la pression se trouvait augmentée. Dans la situation de la figure 6, les conduites de série sont reliées à celles des conduites 51 et 52 qui est à la plus basse pression, quel que soit le sens de déplacement de l'engin, sans augmenter le débit de retour à la pompe. Il faut noter que les organes de déplacement directionnels ne sont pas nécessairement les organes de déplacement avant.

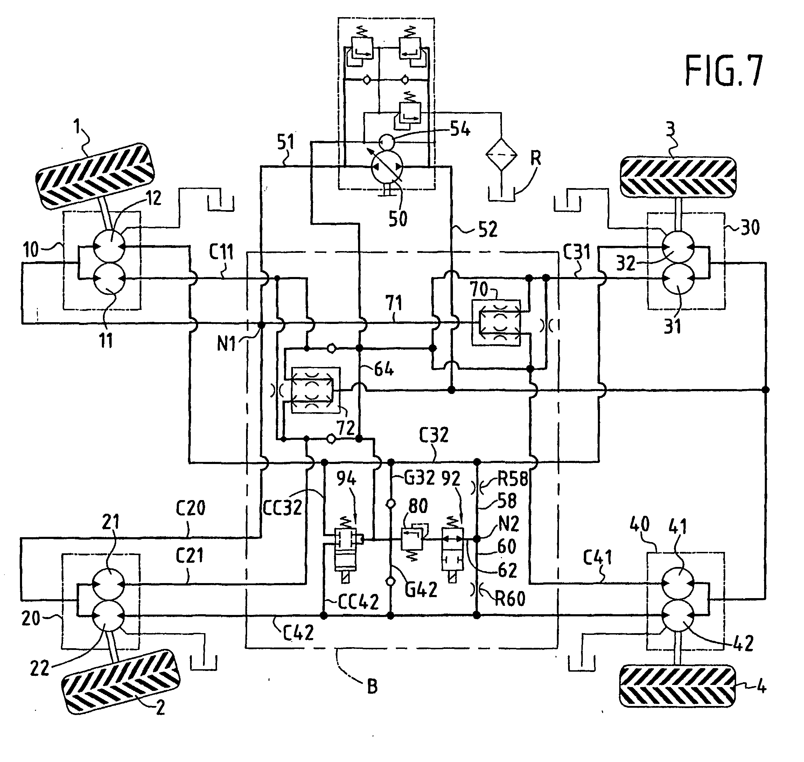

La variante de la figure 7 est proche de celle de la figure 3. Elle utilise en effet également une soupape tarée 80 disposée entre le tronçon de conduite commune 62 et la conduite de raccordement au gavage 64.

Sur la figure 7 un sélecteur 92 à deux positions, qu'on nommera "sélecteur de synchronisation", est interposé entre le noeud N2 et la soupape 80. Dans sa position de repos (dans laquelle il est rappelé par un ressort) représentée sur la figure 7, ce sélecteur fait communiquer la soupape 80 avec le noeud N2, ses deux voies étant reliées à la conduite 62 et communiquant entre elles. Dans cette situation, le fonctionnement du dispositif est analogue à celui du dispositif de la figure 3.

Le sélecteur 92 peut être commandé, par exemple par une commande électrique, pour occuper sa position activée dans laquelle il empêche la communication entre le noeud N2 et la soupape 80. Dans cette situation, les conduites de série C32 et C42 cessent d'être raccordées au circuit basse pression constitué par le circuit de gavage.

On empêche ainsi le transfert vers le circuit basse pression du débit de fluide excédentaire circulant dans les conduites de série 32 ou 42 par exemple en virage. En d'autres termes, on empêche le glissement entre les roues dont les moteurs sont alimentés en série par ces conduites de série, mais on synchronise au contraire parfaitement ces roues en permettant un report de couple maximal entre les moteurs reliés par une conduite de série.

La situation "normale", obtenue par défaut lorsque le sélecteur 92 est dans sa position de repos, reste celle dans laquelle les conduites de série sont reliés mais, par exemple si les roues de l'engin commencent à patiner, l'utilisateur peut momentanément éviter le glissement normal dans cette situation en commandant le sélecteur 92 pour synchroniser les roues dont les moteurs sont reliés par une conduite de série et remédier très rapidement au patinage sans glissement.

Plutôt qu'un sélecteur 92 placé sur la conduite 62, on pourrait utiliser deux sélecteurs analogues disposés respectivement sur les conduites 58 et 60 pour traiter séparément le cas d'un patinage impliquant une roue du côté gauche ou bien une roue du côté droit du véhicule.

La variante de la figure 7 comprend également un sélecteur 94 qui est disposé entre les conduites de série C32 et C42 et le circuit basse pression. Plus précisément, ce sélecteur 94 qu'on nommera "sélecteur de court-circuit" est relié, d'une part, à la conduite 64 de raccordement au circuit basse pression et, d'autre part, à chacune des conduites C32 et C42, respectivement par une première et une deuxième conduite de court-circuit, CC32 et CC42.

Dans sa position de repos (dans laquelle il est constamment rappelé par un ressort) représentée sur la figure 7, ce sélecteur 94 isole les conduites CC32 et CC42 de la conduite 64 et le dispositif fonctionne donc comme celui de la figure 3 (sous réserve de la commande du sélecteur 92, sachant que les sélecteurs 92 et 94 peuvent coexister ou non dans un même dispositif).

Le sélecteur 94 peut être commandé, par exemple par une commande électrique, pour occuper sa position activée dans laquelle il relie les conduites CC32 et CC42 à la conduite 64. Le fluide peut alors circuler entre les conduites de série C32 et C42 et le circuit basse pression sans passer par les restrictions R58 et R60 des conduites de raccordement 58 et 60. Cette situation, dans laquelle les roues dont les moteurs sont reliés par les conduites de série ne sont pas synchronisées et dans laquelle il n'y a plus de report de couple entre ces moteurs, est particulièrement adaptée à la conduite à grande vitesse sur une surface offrant une bonne adhérence telle qu'une route.

Les différentes valves décrites en référence aux figures 1 à 7 sont avantageusement regroupées dans un même bloc de valves, manipulé comme un tout pouvant être par exemple flasqué sur la pompe. Ces valves incluent les restrictions ou les régulateurs de débit, les limiteurs de pression, les soupapes 80 et 82, ou encore les diviseurs de débit 70 et 72 ainsi que, dans le cas de la figure 6, le sélecteur 90 ou, dans le cas de la figure 7, le sélecteur 92 et/ou le sélecteur 94. Sur les figures, le bloc dans lequel les valves sont intégrées est indiqué en traits mixtes et désigné par la lettre B.

Les circuits représentés sur les figures 1 à 7 peuvent comprendre un système d'échange et de balayage des carters des moteurs. Ce système comprend par exemple une valve de prélèvement et d'évacuation unique raccordée à une conduite principale qui est celle qui constitue la conduite d'échappement dans le sens préférentiel de déplacement de l'engin, correspondant au sens préférentiel du fonctionnement des moteurs. Selon un autre exemple, il peut comprendre une valve réunissant un sélecteur d'échange raccordé aux deux conduites 51 et 52 sélectionnant celle d'entre elles qui était la plus basse pression, ainsi qu'une soupape d'évacuation de fluide vers un réservoir sans pression.

## Revendications

1. Dispositif de transmission hydrostatique d'un engin mobile ayant un groupe d'organes de déplacement avant et un groupe d'organes de déplacement arrière (1, 2, 3, 4 ; 1', 3, 4), le ou les organes de déplacement (1, 2 ; 1') de l'un desdits groupes étant orientable par rapport à celui ou à ceux de l'autre groupe (3, 4), le dispositif comprenant un circuit fermé de transmission qui comporte une pompe (50) et des moteurs hydrauliques (10, 20, 30, 40 ; 10', 30, 40) d'un groupe de moteurs avant et d'un groupe de moteurs arrière entraînant les organes de déplacement avant et arrière, un premier de ces groupes de moteurs comprenant au moins deux moteurs (30, 40) auxquels sont respectivement attelés deux organes de déplacement (3, 4) situés de chaque côté de l'engin, les deux moteurs de ce premier groupe de moteurs étant des moteurs doubles, à deux cylindrées distinctes de fonctionnement qui correspondent respectivement à un premier et à un deuxième moteur élémentaire (31, 32 ; 41, 42), le premier moteur élémentaire (31, 41) de chacun de ces moteurs doubles étant relié à la pompe (50) en parallèle avec un moteur (10, 20 ; 10') du deuxième groupe de moteurs, tandis que le deuxième moteur élémentaire (32; 42) est relié en série avec ledit moteur du deuxième groupe de moteurs, une première et une deuxième conduite de série (C32, C42) existant ainsi entre les deuxièmes moteurs élémentaires (32, 42) de chacun des moteurs doubles (30, 40) et le deuxième groupe de moteurs (10, 20 ; 10'),
**caractérisé en ce que** les conduites de série (C32, C42) sont normalement raccordées à un circuit basse pression par des moyens (66 ; 66A, 66B ; 80 ; 82) pour limiter la pression dans les conduites de série et **en ce qu'**il comporte des moyens (R58, R60, R62 ; R'58, R'60) pour limiter le débit de fluide circulant entre les conduites de série et ledit circuit basse pression.

2. Dispositif selon la revendication 1, **caractérisé en ce que** les première et deuxième conduites de série (C32, C42) sont respectivement normalement reliées au circuit basse pression par une première et une deuxième conduite de raccordement (58, 60) et **en ce que** des moyens (R58, R60 ; R'58, R'60) pour limiter le débit de fluide sont disposés sur chacune de ces conduites de raccordement.

3. Dispositif selon la revendication 1 ou 2, **caractérisé en ce que** les moyens pour limiter la pression dans les conduites de série (C32, C42) comprennent un arrangement de limitation de pression (66 ; 80 ; 82) commun auxdites conduites.

4. Dispositif selon la revendication 1 ou 2, **caractérisé en ce que** les moyens pour limiter la pression dans les conduites de série (C32, C42) comprennent un arrangement de limitation de pression (66A, 66B) pour chacune desdites conduites.

5. Dispositif selon l'une quelconque des revendications 1 à 4, **caractérisé en ce que** les moyens pour limiter le débit de fluide circulant entre les conduites de série (C32, C42) et le circuit basse pression comprennent au moins une restriction (R58, R60, R62).

6. Dispositif selon l'une quelconque des revendications 1 à 4, **caractérisé en ce que** les moyens pour limiter le débit de fluide circulant entre les conduites de série (C32, C42) et le circuit basse pression comprennent au moins un régulateur de débit (R'58, R'60).

7. Dispositif selon l'une quelconque des revendications 1 à 6, **caractérisé en ce que** les conduites de série (C32, C42) sont normalement reliées au circuit basse pression par l'intermédiaire d'une soupape tarée (80).

8. Dispositif selon la revendication 2 et l'une quelconque des revendications 1 à 7, **caractérisé en ce qu'**il comprend un tronçon de conduite commune (62) reliant les deux conduites de raccordement (58, 60) au circuit basse pression et **en ce que** des moyens supplémentaires pour limiter le débit et/ou la pression (R62 ; 80 ; 82) sont disposés sur ledit tronçon de conduite commune.

9. Dispositif selon la revendication 8, **caractérisé en ce que** des restrictions (R58, R60, R62) sont disposées sur chaque conduite de raccordement (58, 60) et sur le tronçon de conduite commune (62).

10. Dispositif selon les revendications 7 et 8, **caractérisé en ce que** la soupape tarée (80) est disposée sur le tronçon de conduite commune (62).

11. Dispositif selon la revendication 8, **caractérisé en ce qu'**une soupape (82) commandée par la différence de pression entre le tronçon de conduite commune (62) et l'un des orifices (50A, 50B) de la pompe (50) est interposée entre ledit tronçon de conduite commune et le circuit basse pression.

12. Dispositif selon la revendication 11, **caractérisé en ce que** la soupape (82) est soumise à la pression dans le tronçon de conduite (62) commune par une première chambre de commande (83) reliée audit tronçon et est soumise à la haute pression de la pompe (50) par urie deuxième chambre de commande (84) d'effet antagoniste de celui de la première chambre, cette deuxième chambre étant reliée à l'un des orifices (50A, 50B) de la pompe (50) par l'intermédiaire d'un clapet navette (86) sélectionnant la plus haute des pressions auxdits orifices.

13. Dispositif selon l'une quelconque des revendications 1 à 12, **caractérisé en ce qu'**il comprend un diviseur de débit (70, 72) qui relie la pompe (50) avec les premiers moteurs élémentaires (31, 41 ; 11, 21) par deux conduites parallèles (C31, C41 ; C11, C21) respectivement reliées à chacun desdits moteurs.

14. Dispositif selon la revendication 13, **caractérisé en ce que** les deux conduites parallèles (C31, C41 ; C11, C21) sont reliées par un tronçon de liaison (69) équipé de moyens (69' ; 69") pour limiter le débit de fluide entre lesdites conduites parallèles.

15. Dispositif selon la revendication 14, **caractérisé en ce que** les moyens pour limiter le débit de fluide entre les conduites parallèles (C31, C41) comprennent un régulateur de débit à double flux (69").

16. Dispositif selon l'une quelconque des revendications 1 à 15, **caractérisé en ce que** le circuit basse pression est un circuit de gavage alimenté par une pompe de gavage (54).

17. Dispositif selon l'une quelconque des revendications 1 à 15, **caractérisé en ce que** le circuit basse pression comprend une conduite d'alimentation basse pression (64') reliée à la basse pression de la pompe (50) par un sélecteur de la basse pression (90) relié aux deux orifices (50A, 50B) de la pompe.

18. Dispositif selon l'une quelconque des revendications 1 à 17, **caractérisé en ce que** les moyens (66 ; 66A, 66B ; 80 ; 82) pour limiter la pression dans les conduites de série (C32, C42) et les moyens (R58, R60, R62 ; R'58, R'60) pour limiter le débit de fluide circulant entre les conduites de série et le circuit basse pression sont regroupés dans un bloc de valves (B).

19. Dispositif selon l'une quelconque des revendications 1 à 18, **caractérisé en ce que** les conduites de série (C32, C42) sont reliées au circuit basse pression par l'intermédiaire d'un sélecteur de synchronisation (92) apte, dans sa position de repos, à effectivement mettre en communication les conduites de série (C32, C42) avec le circuit basse pression et à être commandé dans une position active dans laquelle ce sélecteur (92) empêche la circulation de fluide des conduites de série vers le circuit basse pression.

20. Dispositif selon l'une quelconque des revendications 1 à 19, **caractérisé en ce que** les conduites de série (C32, C42) sont reliées au circuit basse pression par l'intermédiaire d'un sélecteur de court-circuit (94) apte à être commandé dans une position active dans laquelle ce sélecteur (94) établit une communication directe entre les conduites de série et le circuit basse pression, à partir de sa position de repos dans laquelle il empêche ladite communication directe.

## Patentansprüche

1. Hydrostatische Übertragungseinrichtung einer beweglichen Maschine mit einer Gruppe von vorderen Verschiebeelementen und einer Gruppe von hinteren Verschiebeelementen (1, 2, 3, 4; 1', 3, 4), wobei das oder die Verschiebeelemente (1, 2; 1') einer der Gruppen in Bezug auf jenes oder jene der anderen Gruppe (3, 4) ausrichtbar sind, wobei die Einrichtung eine geschlossene Übertragungsschaltung umfaßt, die eine Pumpe (50) und Hydraulikmotoren (10, 20, 30, 40; 10', 30, 40) einer vorderen Motorengruppe und einer hinteren Motorengruppe umfaßt, die die vorderen und hinteren Antriebselemente antreiben, wobei eine erste dieser Motorengruppen mindestens zwei Motoren (30, 40) umfaßt, mit denen jeweils zwei Verschiebeelemente (3, 4) verbunden sind, die sich auf jeder Seite der Maschine befinden, wobei die beiden Motoren dieser ersten Motorengruppe Doppelmotoren mit zwei unterschiedlichen Betriebshubräumen sind, die einem ersten bzw. einem zweiten Elementarmotor (31, 32; 41, 42) entsprechen, wobei der erste Elementarmotor (31, 41) jedes dieser Doppelmotoren mit der Pumpe (50) parallel mit einem Motor (10, 20; 10') der zweiten Motorengruppe verbunden ist, während der zweite Elementarmotor (32, 42) in Serie mit dem Motor der zweiten Motorengruppe verbunden ist, wobei eine erste und eine zweite Serienleitung (C32, C42) somit zwischen den beiden Elementarmotoren (32, 42) jedes der Doppelmotoren (30, 40) und der zweiten Motorengruppe (10, 20; 10') vorhanden ist,
**dadurch gekennzeichnet,**
**daß** die Serienleitungen (C32, C42) normalerweise an eine Niederdruckschaltung durch Mittel (66; 66A, 66B; 80; 82) angeschlossen sind, um den Druck in den Serienleitungen zu begrenzen, und
**daß** sie Mittel (R58, R60, R62; R'58, R'60) umfaßt, um die zwischen den Serienleitungen und der Niederdruckschaltung zirkulierende Fluidmenge zu begrenzen.

2. Einrichtung nach Anspruch 1, **dadurch gekennzeichnet, daß** die erste und die zweite Serienleitung (C32, C42) jeweils normal an die Niederdruckschaltung durch eine erste und eine zweite Anschlußleitung (58, 60) angeschlossen sind, und daß Mittel (R58, R60; R'58, R'60) zur Begrenzung der Fluidmenge auf jeder dieser Anschlußleitungen vorgesehen sind.

3. Einrichtung nach Anspruch 1 oder 2, **dadurch gekennzeichnet, daß** die Mittel zur Begrenzung des Drucks in den Serienleitungen (C32, C42) eine Anordnung zur Druckbegrenzung (66; 80; 82) umfassen, die den beiden Leitungen gemeinsam ist.

4. Einrichtung nach Anspruch 1 oder 2, **dadurch gekennzeichnet, daß** die Mittel zur Druckbegrenzung in den Serienleitungen (C32, C42) eine Anordnung zur Druckbegrenzung (66A, 66B) für jede der Leitungen umfassen.

5. Einrichtung nach einem der Ansprüche 1 bis 4, **dadurch gekennzeichnet, daß** die Mittel zur Begrenzung der Fluidmenge, die zwischen den Serienleitungen (C32, C42) und der Niederdruckschaltung zirkuliert, mindestens eine Drosselung (R58, R60, R62) umfassen.

6. Einrichtung nach einem der Ansprüche 1 bis 4, **dadurch gekennzeichnet, daß** die Mittel zur Begrenzung der Fluidmenge, die zwischen den Serienleitungen (C32, C42) und der Niederdruckschaltung zirkuliert, mindestens einen Durchflußregler (R'58, R'60) umfassen.

7. Einrichtung nach einem der Ansprüche 1 bis 6, **dadurch gekennzeichnet, daß** die Serienleitungen (C32, C42) normal an die Niederdruckleitung durch ein geeichtes Ventil (80) angeschlossen sind.

8. Einrichtung nach Anspruch 2 und einem der Ansprüche 1 bis 7, **dadurch gekennzeichnet, daß** sie einen gemeinsamen Leitungsabschnitt (62) umfaßt, der die beiden Anschlußleitungen (58, 60) an die Niederdruckschaltung anschließt, und daß zusätzliche Mittel zur Begrenzung der Menge und/oder des Drucks (R62; 80; 82) auf dem gemeinsamen Leitungsabschnitt angeordnet sind.

9. Einrichtung nach Anspruch 8, **dadurch gekennzeichnet, daß** Drosselungen (R58, R60, R62) auf jeder Anschlußleitung (58, 60) und auf dem gemeinsamen Leitungsabschnitt (62) angeordnet sind.

10. Einrichtung nach den Ansprüchen 7 und 8, **dadurch gekennzeichnet, daß** das geeichte Ventil (80) auf dem gemeinsamen Leitungsabschnitt (62) angeordnet ist.

11. Einrichtung nach Anspruch 8, **dadurch gekennzeichnet, daß** ein durch den Druckunterschied zwischen dem gemeinsamen Leitungsabschnitt (62) und einer der Öffnungen (50A, 50B) der Pumpe (50) gesteuertes Ventil (82) zwischen dem gemeinsamen Leitungsabschnitt und der Niederdruckschaltung angeordnet ist.

12. Einrichtung nach Anspruch 11, **dadurch gekennzeichnet, daß** das Ventil (82) dem Druck in dem gemeinsamen Leitungsabschnitt (62) durch eine erste Steuerkammer (83), die mit dem Abschnitt verbunden ist, und dem Hochdruck der Pumpe (50) durch eine zweite Steuerkammer (84) mit zu jener der ersten Kammer antagonistischer Wirkung ausgesetzt ist, wobei diese zweite Kammer mit einer der Öffnungen (50A, 50B) der Pumpe (50) über eine Klappe (86) verbunden ist, die den höchsten der Druckwerte an den Öffnungen auswählt.

13. Einrichtung nach einem der Ansprüche 1 bis 12, **dadurch gekennzeichnet, daß** sie einen Durchflußteiler (70, 72) umfaßt, der die Pumpe (50) mit den ersten Elementarmotoren (31, 41; 11, 21) durch zwei parallele Leitungen (C31, C41; C11, C21) verbindet, die jeweils mit jedem der Motoren verbunden sind.

14. Einrichtung nach Anspruch 13, **dadurch gekennzeichnet, daß** die beiden parallelen Leitungen (C31, C41; C11, C21) durch einen Verbindungsabschnitt (69) verbunden sind, der mit Mitteln (69'; 69") zur Begrenzung der Fluidmenge zwischen den parallelen Leitungen versehen ist.

15. Einrichtung nach Anspruch 14, **dadurch gekennzeichnet, daß** die Mittel zur Begrenzung der Fluidmenge zwischen den parallelen Leitungen (C31, C41) einen Durchflußregler (69") mit doppeltem Fluß umfassen.

16. Einrichtung nach einem der Ansprüche 1 bis 15, **dadurch gekennzeichnet, daß** die Niederdruckschaltung eine Aufladeschaltung ist, die durch eine Aufladepumpe (54) versorgt wird.

17. Einrichtung nach einem der Ansprüche 1 bis 15, **dadurch gekennzeichnet, daß** die Niederdruckschaltung eine Niederdruckversorgungsleitung (64') umfaßt, die an den Niederdruck der Pumpe (50) durch eine Niederdruckauswahlvorrichtung (90) angeschlossen ist, die mit den beiden Öffnungen (50A, 50B) der Pumpe verbunden ist.

18. Einrichtung nach einem der Ansprüche 1 bis 17, **dadurch gekennzeichnet, daß** die Mittel (66; 66A, 66B; 80, 82) zur Begrenzung des Drucks in den Serienleitungen (C32, C42) und die Mittel (R58, R60, R62; R'58, R'60) zur Begrenzung der Fluidmenge, die zwischen den Serienleitungen und der Niederdruckschaltung zirkuliert, in einem Ventilblock (B) zusammengefaßt sind.

19. Einrichtung nach einem der Ansprüche 1 bis 18, **dadurch gekennzeichnet, daß** die Serienleitungen (C32, C42) mit der Niederdruckschaltung über eine Synchronisationsauswahlvorrichtung (92) verbunden sind, die in ihrer Ruheposition tatsächlich die Serienleitungen (C32, C42) und die Niederdruckschaltung in Verbindung bringen kann und in einer aktiven Position, in der diese Auswahlvorrichtung (92) die Fluidzirkulation von den Serienleitungen zu der Niederdruckschaltung verhindert, gesteuert werden kann.

20. Einrichtung nach einem der Ansprüche 1 bis 19, **dadurch gekennzeichnet, daß** die Serienleitungen (C32, C42) mit der Niederdruckschaltung über eine Kurzschlußauswahlvorrichtung (94) verbunden sind, die in eine aktive Position gesteuert werden kann, in der diese Auswahlvorrichtung eine direkte Verbindung zwischen den Serienleitungen und der Niederdruckschaltung ausgehend von ihrer Ruhestellung, in der sie die direkte Verbindung verhindert, herstellt.

## Claims

1. Hydrostatic transmission apparatus for a mobile vehicle having a group of front displacement members and a group of rear displacement members (1, 2, 3, 4; 1', 3, 4), the displacement member(s) (1, 2; 1') of one of said groups being steerable relative to the displacement member(s) of the other group (3, 4), the apparatus comprising a closed transmission circuit which includes a pump (50) and hydraulic motors (10, 20, 30, 40; 10', 30, 40) of a group of front motors and of a group of rear motors driving the front and rear displacement members, a first one of the groups of motors comprising at least two motors (30, 40) to which two displacement members (3, 4) situated on either side of the vehicle are respectively coupled, the two motors of said first group of motors being double motors, each having two distinct operating cubic capacities that correspond respectively to first and second elementary motors (31, 32; 41, 42), the first elementary motor (31, 41) of each of the double motors being connected to the pump (50) in parallel with a motor (10, 20; 10') of the second group of motors, while the second elementary motor (32, 42) is connected in series with said motor of the second group of motors, first and second series ducts (C32, C42) thus existing between the second elementary motors (32, 42) of each of the double motors (30, 40) and the second group of motors (10, 20; 10');
said apparatus being **characterised in that** the series ducts (C32, C42) are normally connected to a low-pressure circuit via means (66; 66A, 66B; 80; 82) for limiting the pressure in the series ducts, and **in that** it further comprises means (R58, R60, R62; R'58, R'60) for limiting the flow rate of fluid flowing between the series ducts and said low-pressure circuit.

2. Apparatus according to claim 1, **characterised in that** the first and second series ducts (C32, C42) are respectively normally connected to the low-pressure circuit by respective first and second connection ducts (58, 60), and **in that** means (R58, R60; R'58, R'60) for limiting the fluid flow rate are disposed on each of the connection ducts.

3. Apparatus according to claim 1 or claim 2, **characterised in that** the means for limiting the pressure in the series ducts (C32, C42) comprise a pressure limiter arrangement (66; 80; 82) that is common to said ducts.

4. Apparatus according to claim 1 or claim 2, **characterised in that** the means for limiting the pressure in the series ducts (C32, C42) comprise one pressure limiter arrangement (66A, 66B) for each of said ducts.

5. Apparatus according to any one of claims 1 to 4, **characterised in that** the means for limiting the flow rate of fluid flowing between the series ducts (C32, C42) and the low-pressure circuit comprise at least one constriction (R58, R60, R62).

6. Apparatus according to any one of claims 1 to 4, **characterised in that** the means for limiting the flow rate of fluid flowing between the series ducts (C32, C42) and the low-pressure circuit comprise at least one flow-rate regulator (R'58, R'60).

7. Apparatus according to any one of claims 1 to 6, **characterised in that** the series ducts (C32, C42) are normally connected to the low-pressure circuit via a rated valve (80).

8. Apparatus according to claim 2 and any one of claims 1 to 7, **characterised in that** it comprises a common duct segment (62) connecting the two connection ducts (58, 60) to the low-pressure circuit, and **in that** additional means for limiting the flow rate and/or the pressure (R62; 80; 82) are disposed on said common duct segment.

9. Apparatus according to claim 8, **characterised in that** constrictions (R58, R60, R62) are disposed on each connection duct (58, 60) and on the common duct segment (62).

10. Apparatus according to claim 7 and claim 8, **characterised in that** the rated valve (80) is disposed on the common duct segment (62).

11. Apparatus according to claim 8, **characterised in that** a valve (82) controlled by the pressure difference between the common duct segment (62) and one of the orifices (50A, 50B) of the pump (50) is interposed between said common duct segment and the low-pressure circuit.

12. Apparatus according to claim 11, **characterised in that** the valve (82) is subjected to the pressure in the common duct segment (62) by a first control chamber (83) connected to said segment, and is subjected to the high pressure of the pump (50) by a second control chamber (84) which acts in opposition to the action of the first chamber, said second chamber being connected to one of the orifices (50A, 50B) of the pump (50) via a shuttle valve (86) selecting the higher of the pressures at said orifices.

13. Apparatus according to any one of claims 1 to 12, **characterised in that** it comprises a flow-rate divider (70, 72) which connects the pump (50) to the first elementary motors (31, 41; 11, 21) via two parallel ducts (C31, C41; C11, C21) connected to respective ones of said motors.

14. Apparatus according to claim 13, **characterised in that** the two parallel ducts (C31, C41; C11, C21) are connected together via a connection segment (69) equipped with means (69'; 69") for limiting the flow rate of fluid between said parallel ducts.

15. Apparatus according to claim 14, **characterised in that** the means for limiting the flow rate of fluid between the parallel ducts (C31, C41) comprise a both-way flow-rate regulator (69").

16. Apparatus according to any one of claims 1 to 15, **characterised in that** the low-pressure circuit is a booster circuit fed via a booster pump (54).

17. Apparatus according to any one of claims 1 to 15, **characterised in that** the low-pressure circuit includes a low-pressure feed duct (64') connected to the low pressure of the pump (50) via a low-pressure selector (90) connected to the two orifices (50A, 50B) of the pump.

18. Apparatus according to any one of claims 1 to 17, **characterised in that** the means (66; 66A, 66B; 80; 82) for limiting the pressure in the series ducts (C32, C42) and the means (R58, R60, R62; R'58, R'60) for limiting the flow rate of fluid flowing between the series ducts and the low-pressure circuit are grouped together in a valve unit (B).

19. Apparatus according to any one of claims 1 to 18, **characterised in that** the series ducts (C32, C42) are connected to the low-pressure circuit via a synchronization selector (92) suitable, in its rest position, for actually putting the series ducts (C32, C42) into communication with the low-pressure circuit and for being caused to go into an active position in which said selector (92) prevents fluid from flowing from the series ducts towards the low-pressure circuit.

20. Apparatus according to any one of claims 1 to 19, **characterised in that** the series ducts (C32, C42) are connected to the low-pressure circuit via a short-circuit selector (94) suitable for being caused to go into an active position in which said selector (94) establishes direct communication between the series ducts and the low-pressure circuit, starting from its rest position in which it prevents said direct communication.
